# EUROPÄISCHE PATENTSCHRIFT

(11) **EP 1 744 921 B1**
(45) Veröffentlichungstag und Bekanntmachung des Hinweises auf die Patenterteilung: **19.01.2011**
(21) Anmeldenummer: 05779888.6
(22) Anmeldetag: 18.03.2005
(51) Int. Cl.: B60J 7/12

(54) **VERDECK EINES CABRIOLET-KRAFTFAHRZEUGES**
HOOD FOR A CABRIOLET VEHICLE
CAPOTE POUR UN VEHICULE CABRIOLET

(30) Priorität: 01.04.2004 DE 102004016201
(43) Veröffentlichungstag der Anmeldung: 24.01.2007
(73) Patentinhaber: Wilhelm Karmann GmbH, 49084 Osnabrück (DE)
(72) Erfinder: HESELHAUS, Udo, 449479 Ibbenbüren (DE)
(74) Vertreter: Kronthaler, Schmidt & Coll.
(86) Internationale Anmeldenummer: PCT/DE2005/000501
(87) Internationale Veröffentlichungsnummer: WO 2005/095138

(56) Entgegenhaltungen:
- DE-A1- 19 750 418
- DE-B- 1 192 529
- US-A- 4 708 389
- US-A- 5 100 195

## Beschreibung

Die Erfindung betrifft ein Verdeck eines Cabriolet-Kraftfahrzeuges nach der im Oberbegriff des Patentanspruches 1 näher genannten Art.

Bei der Festlegung einer flexiblen Dachhaut eines Verdecks besteht grundsätzlich die Möglichkeit, diese an einem separaten Spannbügel festzulegen, welcher mit der Verdeckkinematik oder separat hiervon bewegt wird, oder die flexible Dachhaut karosseriefest zu befestigen.

Ein Beispiel einer Befestigung einer flexiblen Dachhaut an einem mit einem Verdeckmechanismus verbundenen Dachhauthaltebügel ist beispielsweise aus der DE 39 03 680 C1 bekannt.

Aus der EP 0 502 320 A2 ist ein Verdeck eines Cabriolet-Kraftfahrzeuges mit einer flexiblen Dachhaut bekannt, welche direkt an der Karosserie festgelegt ist. Hierzu ist eine Verdeck-Befestigung mit einer zumindest im hinteren Teil des Fahrzeuges an der Karosserie angeordneten Befestigungsausformung, in der der Verdeckstoff im Bereich seines Randes mit einem Spannglied aufgenommen ist, vorgesehen. Dabei sind eine die Befestigungsausformung aufweisende Karosserie-Klemmleiste und ein mit dem Verdeckstoff wasserdicht verbundenes Klemmprofil mit integriertem Spannglied in gegeneinander verspannter Verbindungsstellung in einem von Karosserieteilen abgedeckten Karosserieschacht angeordnet. Als integriertes Spannglied wird eine über die gesamte Breite des hinteren Teils des Fahrzeuges im Bereich des Kofferdeckels verlaufende Seileinlage in das Klemmprofil vorgeschlagen.

Das Klemmprofil ist mit einer an Karosserieteilen gehaltenen Karosserie-Klemmleiste verspannt, welche auf eine Kante eines einen Karosserieschacht bildenden Wasserkanalblechs aufgesteckt ist und in geschlossenem Zustand des Verdecks unter dem Kofferdeckel liegt, welcher im geschlossenen Zustand des Verdecks mit einer reibungsmindernden Karosserieabschlussdichtung an der flexiblen Dachhaut des Verdecks anliegt.

Bei dieser bekannten Anordnung besteht wenig gestalterischer Spielraum für die Anordnung des Klemmprofils mit dem integrierten Spannglied, da ein größerer Abstand zwischen der Karosserieabschlussdichtung des Kofferdeckels und dem zur Anbindung der flexiblen Dachhaut an die Karosserie vorgesehenen Klemmprofil die Dichtwirkung im Bereich der Karosserieabschlussdichtung beeinträchtigt. Folglich ist eine Anordnung des das Spannglied enthaltenden Klemmprofils für die flexible Dachhaut in einer Fahrzeughöhenposition nahe der Karosserieabschlussdichtung vorteilhaft. Eine derartige vergleichsweise hohe Anordnung der Anbindung der flexiblen Dachhaut an die Karosserie bedingt jedoch, dass die Ablageposition des Verdecks ebenfalls relativ hoch bezogen auf die Fahrzeughöhe gewählt werden muss, womit der Spielraum für die Gestaltung der Karosserie und des Verdecks erheblich eingeschränkt ist.

Des Weiteren ist aus der DE 1 192 529 eine Verdeckbefestigung bekannt, bei der der Verdeckstoff in einer als Befestigungsrinne ausgebildeten Befestigungsausformung durch ein von außen aufgelegtes Spannglied gehalten wird, mit dem der Verdeckstoff in Form einer Schleife in die Befestigungsrinne hineingezogen wird. Als Spannglied dient dabei ein Spanndraht, welcher unmittelbar auf die Schleife des Verdeckstoffes aufgelegt ist und bei Aufbringung der notwendigen Spannkräfte eine den Verdeckstoff randseitig beeinträchtigende Kerbwirkung hervorruft. Die Anordnung der Befestigung des Verdeckstoffes und des Spanngliedes erlaubt auch hier keine auf die Fahrzeughöhe bezogene niedrige Anordnung eines Verdeckablageraumes.

Aus der US 4,708,389 ist weiterhin ein zu öffnendes Dach einer Fahrzeugstruktur bekannt, bei der eine flexible Verdeckplane heckseitig an der Fahrzeugkarosserie befestigt ist. Zur Dichtung der Verdeckplane gegenüber der Fahrzeugkarosserie ist auf jeder Fahrzeugseite ein zweiteiliger Spannbügel mit einem fahrzeugfrontseitigen und einem fahrzeugheckseitigen Teil vorgesehen, welche über ein Gelenk miteinander verbunden sind. Bei einem Übergang von einem offenen zu einem geschlossenen Zustand des Verdecks wird dieser zweiteilige Spannbügel um eine fahrzeugfrontseitige Schwenkachse aus einer abgesenkten Ablageposition in eine die Verdeckplane an eine karosserieseitige Dichteinrichtung drückende Dichtstellung in Fahrzeughochrichtung bewegt. Der fahrzeugheckseitige Teil des Spannbügels wird dabei jeweils von einem sowohl an dem heckseitigen Teil des Spannbügels als auch an einem Querbügel befestigten Band angehoben und von diesem Band in Dichtstellung gehalten.

Eine solche Ausgestaltung des Spannbügels und dessen Antrieb ist jedoch aufwändig.

Weitere Mechanismen zur Abdichtung einer Dachplane eines Verdecks gegenüber der Cabriolet-Fahrzeugkarosserie sind beispielsweise in der US 5,100,195, der DE 197 50 418 A1 und der DE 1 192 529 beschrieben.

Es ist Aufgabe der vorliegenden Erfindung, ein Verdeck eines Cabriolet-Kraftfahrzeuges mit einer flexiblen Dachhaut der eingangs genannten Art zu schaffen, bei dem eine Ablage des Verdecks auf einem niedrigen Fahrzeughöhenniveau möglich ist und eine notwendige Spannwirkung und Dichtwirkung im geschlossenen Zustand des Verdecks auf einfache konstruktive Weise erreicht wird.

Erfindungsgemäß wird diese Aufgabe mit einem Verdeck eines Cabriolet-Kraftfahrzeuges gemäß den kennzeichnenden Merkmalen des Patentanspruches 1 gelöst.

Die Ausgestaltung eines Verdecks mit einer auf die flexible Dachhaut einwirkenden Spanneinrichtung, welche mit wenigstens einem erfindungsgemäß ausgebildeten und angeordneten Spannbügel ausgebildet ist, der die flexible Dachhaut im geschlossenen Zustand des Verdecks gegen eine Karosserieabschlussdichtung drückt, hat den Vorteil, dass die Anbindung der flexiblen Dachhaut an die Karosserie weit unterhalb der rückwärtigen Karosserieöffnungslinie und einer zumindest im Bereich an diese angrenzende Karosserieabschlussdichtung gewählt werden kann, ohne dass hierdurch die Wirkung im geschlossenen Zustand des Verdecks beeinträchtigt wird. Da das Verdeck um so niedriger bezogen auf die Fahrzeughöhe abgelegt werden kann, je tiefer die Anbindung der flexiblen Dachhaut an die Karosserie realisiert wird, kann mit der Ausgestaltung eines Verdecks mit einer erfindungsgemäßen Spanneinrichtung ein gegenüber die Kantenlösung ungleich tieferer Anbindungspunkt der flexiblen Dachhaut an die Karosserie mit einer entsprechenden Stofflänge zwischen der vorzugsweise in die flexible Dachhaut eingeschweißten Heckscheibe und der Karosserieanbindung gewählt werden.

Indem der wenigstens eine Spannbügel gemäß der Erfindung fahrzeugheckseitig um ein karosseriefestes Gelenk verschwenkbar ist, kann der Spannbügel mit einem konstruktiv einfachen Gelenkmechanismus bei einem Überführen des Verdecks aus einer solchen tiefen Ablageposition in eine Schließposition die flexible Dachhaut an die Karosserieabschlussdichtung drücken.

Die Karosserieabschlussdichtung im Sinne der vorliegenden Erfindung ist in ihrem weitesten Sinne zu verstehen und kann jegliche Dichtung darstellen, welche einen Wassereintritt in einen Karosserieschacht verhindern soll. Vorteilhafterweise ist die Karosserieabschlussdichtung angrenzend an die Karosserieöffnungslinie angeordnet.

Die Spanneinrichtung kann sowohl mit einem einzigen, die Fahrzeugbreite im Wesentlichen überspannenden Spannbügel als auch mit mehreren, vorzugsweise zwei symmetrisch zueinander angeordneten Spannbügeln ausgebildet sein, welche hinsichtlich ihres Antriebs sowohl separat angetriebene Einheiten als auch an die Verdeckkinematik angebundene, mit dem Verdeckgestänge bewegbare Einheiten darstellen.

Weitere Vorteile und vorteilhafte Ausgestaltungen des Gegenstandes gemäß der Erfindung sind der Beschreibung, der Zeichnung und den Patentansprüchen entnehmbar.

Es zeigt:
- Fig. 1: eine perspektivische Teilansicht eines hinteren Bereiches eines Cabriolet- Kraftfahrzeuges mit einem Verdeck in ge- schlossenem Zustand;
- Fig. 2: einen schematischen, vereinfachten Quer- schnitt durch eine erfindungsgemäße Spann- einrichtung des Verdecks der Fig. 1 ent- lang einer Linie II-II in Fig. 1;
- Fig. 3: einen schematischen, vereinfachten Quer- schnitt durch das Verdeck der Fig. 1 und deren Spanneinrichtung entlang einer Linie III-III in Fig. 1;
- Fig. 4: einen der Fig. 2 entsprechenden schemati- schen Querschnitt durch die erfindungsge- mäße Spanneinrichtung in einem abgelegten Zustand des Verdecks;
- Fig. 5: eine vereinfachte perspektivische Ansicht der erfindungsgemäßen Spanneinrichtung im geschlossenen Zustand des Verdecks gemäß Fig. 1 bis 3;
- Fig. 6: eine Darstellung der Spanneinrichtung ge- mäß Fig. 5 bei einem teilweise geöffneten Zustand des Verdecks;
- Fig. 7: eine der Fig. 5 und Fig. 6 entsprechende perspektivische Ansicht der Spanneinrich- tung im abgelegten Zustand des Verdecks; und
- Fig. 8: eine perspektivische Teilansicht des Ver- decks des Cabriolet-Kraftfahrzeuges der Fig. 1 mit einer alternativen Ausgestal- tung der Spanneinrichtung.

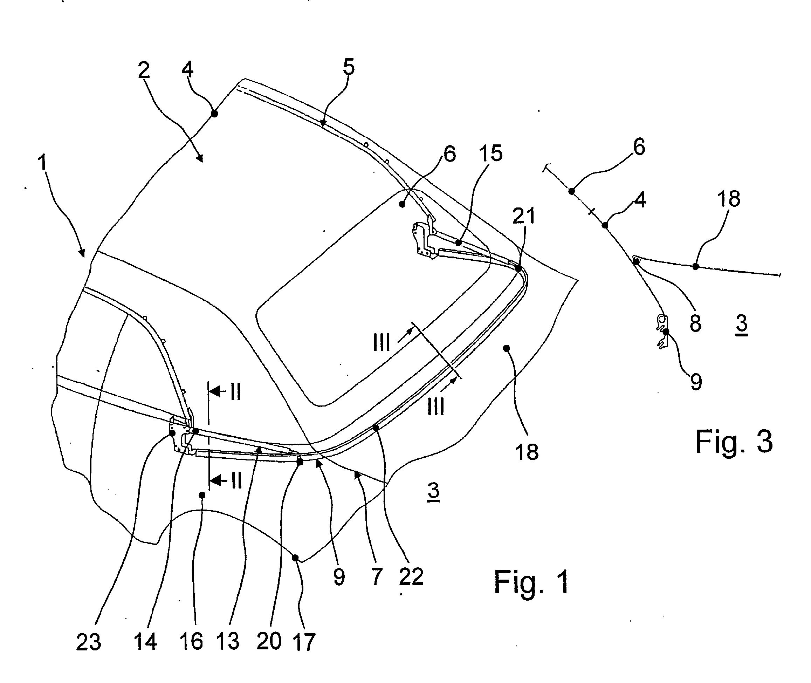

In Fig. 1 ist ein heckseitiger Bereich eines Cabriolet-Kraftfahrzeuges 1 gezeigt, bei dem ein Verdeck 2 zwischen einer geschlossenen, an einer Dachspitze des Kraftfahrzeuges 1 anliegenden Position und einer Ablageposition in einem heckseitigen Ablageraum 3 verlagerbar ist.

Das Verdeck 2 ist als so genanntes "Soft-Top" bzw. Stoffverdeck mit einer flexiblen Dachhaut 4 ausgebildet, welche an einem diese tragenden und die Verlagerung des Verdecks 2 bewirkenden Verdeckgestänge 5 befestigt ist sowie mit ihrem Randbereich unterhalb eines Heckscheibenfensters 6 an die Fahrzeugkarosserie 7 angebunden ist.

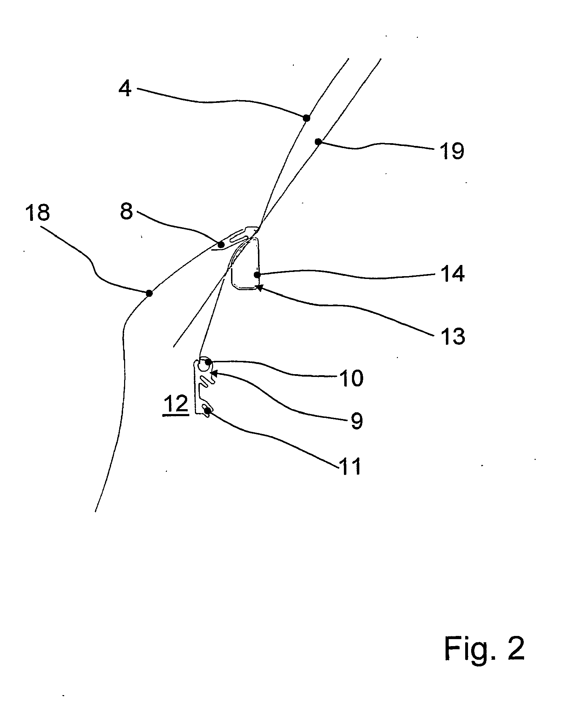

Hierzu weist die Fahrzeugkarosserie 7 unterhalb einer Karosserieöffnungslinie mit einer in Fig. 2 bis Fig. 4 näher dargestellten Karosserieabschlussdichtung 8 eine Befestigungseinrichtung 9 auf, welche in der gezeigten Ausführung mit einer die flexible Dachhaut 4 haltenden Klemmleiste 10 und Verbindungskonturen 11 zum Verbinden mit einem Bügel 22 oder mit anderen Karosserieelementen im Bereich eines Karosserieschachtes 12, wie beispielsweise mit einem Wasserkanalprofil oder einem Verdeckwannenblech, ausgebildet ist.

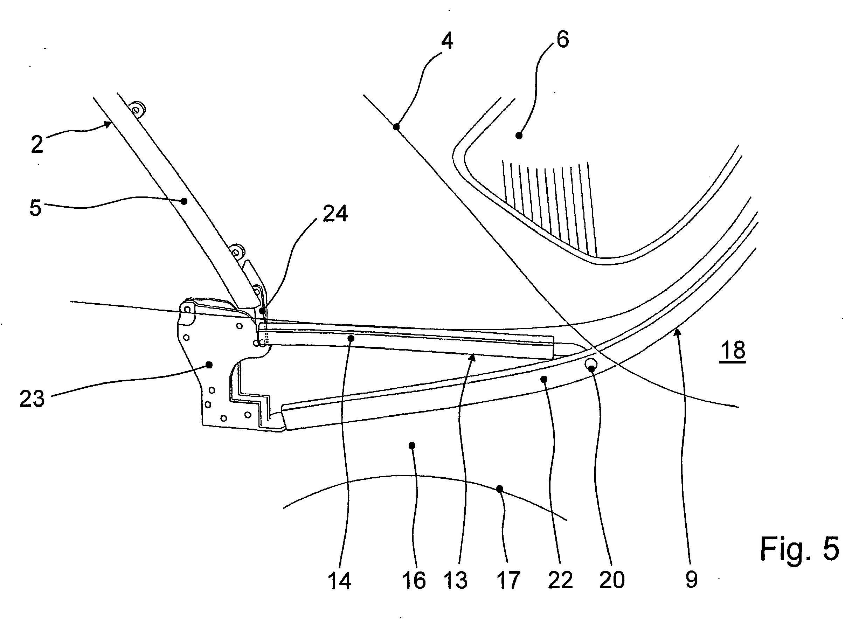

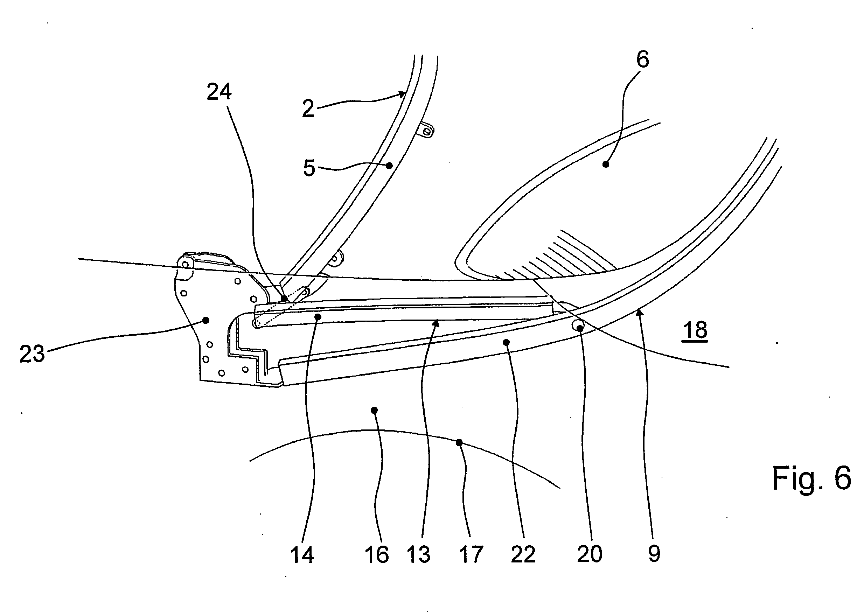

Zum Spannen der flexiblen Dachhaut 4 im geschlossenen Zustand des Verdecks 2 ist eine Spanneinrichtung 13 vorgesehen, welche bei der Ausführung gemäß Fig. 1 bis Fig. 7 mit zwei jeweils einer Fahrzeugseite zugeordneten Spannbügeln 14, 15 ausgebildet ist.

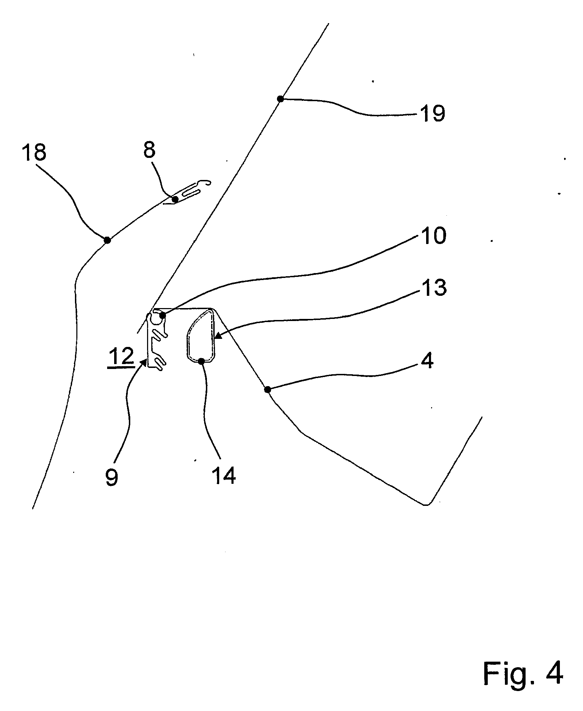

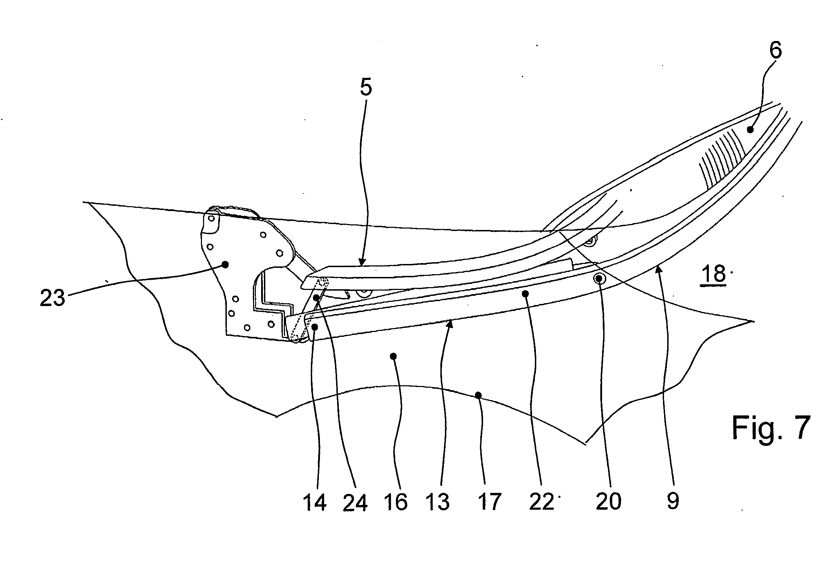

Die seitlichen Spannbügel 14, 15 sind zwischen einer ersten, in Fig. 4 und Fig. 7 schematisch gezeigten Position bei abgelegtem Verdeck 2 und einer in Fig. 1, 2, 3 und 5 gezeigten Position bei geschlossenem Zustand des Verdecks 2 verlagerbar, wobei die Spannbügel 14, 15 in geschlossenem Zustand des Verdecks 2 die flexible Dachhaut 4 gegen die im Bereich der Karosserieöffnungslinie angeordnete Karosserieabschlussdichtung 8 drükken.

Die Karosserieöffnungslinie wird bei der gezeigten Ausführung durch eine Oberkante einer seitlichen Karosserieaußenhaut 16 oberhalb einer Radöffnung 17 und eine Oberkante eines Heckdeckels 18 gebildet, jedoch kann in hiervon abweichenden Ausführungen auch vorgesehen sein, dass beispielsweise anstelle des Heckdeckels 18 ein auch mehrteilig ausgeführtes Karosserieheckelement die Karosserieöffnungslinie bildet.

Wie auch durch eine jeweils in Fig. 2 und Fig. 3 eingezeichnete theoretische Spannrichtung 19 der flexiblen Dachhaut 4 ersichtlich ist, wird durch die Spanneinrichtung 13 die Spannrichtung der flexiblen Dachhaut 4 derart verändert, dass diese bei geschlossenem Zustand des Verdecks 2 dichtend an der Karosserieabschlussdichtung 8 anliegt.

Bei der gezeigten vorteilhaften Ausgestaltung gemäß Fig. 1 bis Fig. 7 sind die seitlichen Spannbügel 14, 15 an ihrem heckseitigen Ende jeweils um eine karosseriefesten Gelenkpunkt 20 bzw. 21 verschwenkbar, welcher vorliegend an der Befestigungseinrichtung 9 der Fahrzeugkarosserie 7 für die flexible Dachhaut 4 angeordnet ist.

Die Befestigungseinrichtung 9 besteht in den gezeigten Ausführungen im Wesentlichen aus einem sich über die Fahrzeugbreite erstreckenden, wenigstens annähernd U-förmigen Bügel 22, auf den hier das Klemmprofil 10 zur Halterung der flexiblen Dachhaut 4 wenigstens bereichsweise aufgesteckt ist.

Der Fachmann wird je nach Anwendungsfall abweichend von der gezeigten Ausführung mit einem Klemmprofil auch eine Befestigung der flexiblen Dachhaut an dem Bügel 22 oder einem anderen karosseriefesten Element mittels Verschraubung, Vernietung oder dergleichen wählen, wenn dies für den konkreten Anwendungsfall geeigneter ist.

Bei den gezeigten Ausführungen ist der Bügel 22 der Befestigungseinrichtung 9 mit seinen jeweiligen Enden an einem jeweils im Seitenbereich des Fahrzeuges angeordneten Verdeckhauptlager 23 angelenkt, an dem eine nicht weiter gezeigte Antriebseinrichtung angreift und das hiervon angetriebene Verdeckgestänge 5 angelenkt ist. Hinsichtlich seiner Dimensionierung ist der Bügel 22 vorliegend größer als die fahrzeuginnenraumseitig von diesem angeordneten Spannbügel 14, 15 ausgelegt.

Die seitlichen Spannbügel 14, 15 sind mit ihrem fahrzeugfrontseitigem Ende über einen Gelenkhebel 24 und das Verdeckgestänge 5. ebenfalls mit dem Verdeckhauptlager 23 gelenkig verbunden, wobei die Anlenkung in einem bezogen auf die Fahrzeughöhe höheren Punkt als die Anlenkung des Bügels 22 der Befestigungseinrichtung 9 angeordnet ist.

Die mit dem Verdeckgestänge 5 und hiermit mit dem Hauptverdecklager 23 verbundene Spanneinrichtung 13 ist bei der Ausführung gemäß Fig. 1 bis Fig. 7 mittels der das Verdeckgestänge 5 antreibenden, nicht näher dargestellten Antriebseinrichtung, welche beispielsweise ein Hydraulikzylinder ist, antreibbar und somit mit der Kinematik des Verdeckgestänges 5 bewegbar.

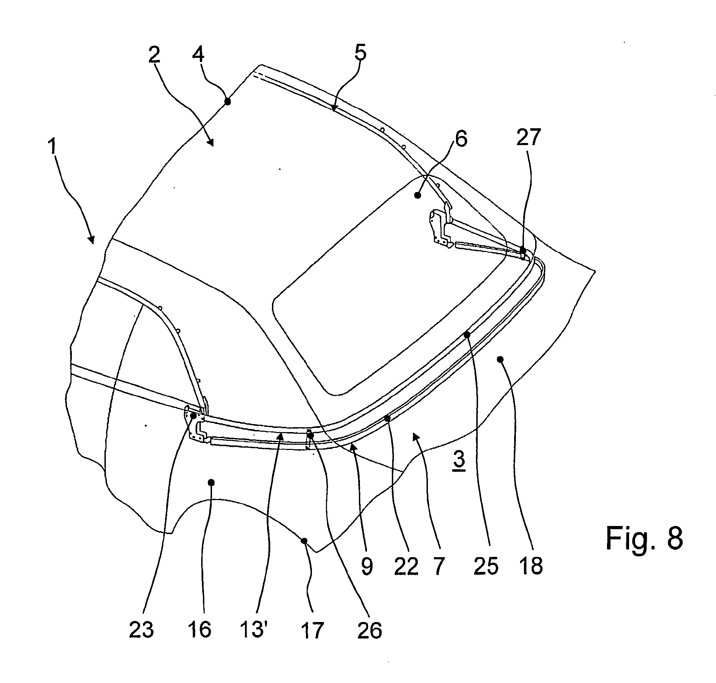

In Fig. 8 ist eine alternative Ausführung einer Spanneinrichtung 13' für die flexible Dachhaut 4 des ansonsten in seinem Aufbau der Darstellung der Fig. 1 bis Fig. 7 entsprechenden Verdecks 2 gezeigt.

Im Unterschied zur Ausführung gemäß Fig. 1 bis Fig. 7 mit zwei seitlichen Spannbügeln 14, 15 ist die in Fig. 8 dargestellte Spanneinrichtung 13' mit einem einzigen Spannbügel 25 ausgebildet, welcher im Wesentlichen U-förmig wie der Bügel 22 der Befestigungseinrichtung 9 ausgebildet ist und mit seinen Enden jeweils an dem zugeordneten seitlichen Verdeckhauptlager 23 angelenkt ist. In seinem heckseitigen Bereich, vorliegend im Bereich des Überganges zwischen den seitlichen Schenkeln zur Traverse des U-förmigen Spannbügels 25, ist dieser beidseitig über einen Gelenkhebel 26 bzw. 27 mit dem Bügel 22 der Befestigungseinrichtung 9 verbunden und somit karosseriefest angelenkt.

Der Spannbügel 25 ist analog den bei der Ausführung gemäß Fig. 1 bis Fig. 7 vorgesehenen seitlichen Spannbügeln 14, 15 von einer Position bei abgelegtem Verdeck 2, in dem sich der Spannbügel 25 im Wesentlichen auf Fahrzeughöhe des Bügels 22 der Befestigungseinrichtung 9 befindet, in eine die flexible Dachhaut 4 an die Karosserieabschlussdichtung 8 drückende Position verlagerbar. Im Unterschied zur Ausführung nach Fig. 1 bis Fig. 7 ist hier ein separater Antrieb für den Spannbügel 25 vorgesehen, welcher in Abhängigkeit der Kinematik des Verdeckgestänges 5 ansteuerbar ist.

In weiteren Ausführungen kann selbstverständlich vorgesehen sein, dass eine Spanneinrichtung, welche im Wesentlichen der in Fig. 1 bis Fig. 7 gezeigten Spanneinrichtung 13 entspricht, mit einem separaten Antrieb ausgestattet ist, oder dass ein einziger Spannbügel wie in Fig. 8 an das Verdeckgestänge 5 ohne eigenen Antrieb angebunden ist.

### BEZUGSZEICHEN

- 1: Cabriolet-Kraftfahrzeug
- 2: Verdeck
- 3: Ablageraum
- 4: flexible Dachhaut
- 5: Verdeckgestänge
- 6: Heckscheibenfenster
- 7: Fahrzeugkarosserie
- 8: Karosserieabschlussdichtung
- 9: Befestigungseinrichtung
- 10: Klemmprofil
- 11: Verbindungskonturen
- 12: Karosserieschacht
- 13: Spanneinrichtung
- 13': Spanneinrichtung
- 14: seitlicher Spannbügel
- 15: seitlicher Spannbügel
- 16: Karosserieaußenhaut
- 17: Radöffnung
- 18: Heckdeckel
- 19: theoretische Spannrichtung
- 20: Gelenkpunkt
- 21: Gelenkpunkt
- 22: Bügel der Befestigungseinrichtung
- 23: Verdeckhauptlager
- 24: Gelenkhebel
- 25: Spannbügel
- 26: Gelenkhebel
- 27: Gelenkhebel

## Patentansprüche

1. Verdeck eines Cabriolet-Kraftfahrzeuges (1) mit einer flexiblen Dachhaut (4), welche an einem Verdeckgestänge (5) und in ihrem heckseitigen Bereich an einer Befestigungseinrichtung (9) der Fahrzeugkarosserie (7) befestigt ist, wobei eine auf die flexible Dachhaut (4) im Bereich ihrer Befestigung an der Fahrzeugkarosserie (7) im geschlossenen Zustand des Verdecks (2) einwirkende Spanneinrichtung (13, 13') vorgesehen ist, welche mit wenigstens einem Spannbügel (14, 15, 25) ausgebildet ist, welcher die flexible Dachhaut (4) im geschlossenen Zustand des Verdecks (2) gegen eine Karosserieabschlussdichtung (8) drückt,
**dadurch gekennzeichnet,**
**dass** die Spanneinrichtung (13) jeweils einen einer Fahrzeugseite zugeordneten seitlichen Spannbügel (14, 15) aufweist, wobei der seitliche Spannbügel (14, 15) im Wesentlichen in Fahrzeuglängsrichtung angeordnet und an seinem fahrzeugheckseitigen Ende um einen karosseriefesten Gelenkpunkt (20, 21) verschwenkbar ist.

2. Verdeck eines Cabriolet-Kraftfahrzeuges (1) mit einer flexiblen Dachhaut (4), welche an einem Verdeckgestänge (5) und in ihrem heckseitigen Bereich an einer Befestigungseinrichtung (9) der Fahrzeugkarosserie (7) befestigt ist, wobei eine auf die flexible Dachhaut (4) im Bereich ihrer Befestigung an der Fahrzeugkarosserie (7) im geschlossenen Zustand des Verdecks (2) einwirkende Spanneinrichtung (13, 13') vorgesehen ist, welche mit wenigstens einem Spannbügel (14, 15, 25) ausgebildet ist, welcher die flexible Dachhaut (4) im geschlossenen Zustand des Verdecks (2) gegen eine Karosserieabschlussdichtung (8) drückt,
**dadurch gekennzeichnet,**
**dass** die Spanneinrichtung (13') mit einem einzigen sich im Wesentlichen über die Fahrzeugbreite erstreckenden U-formigen Spannbügel (25) ausgebildet ist, welcher in seinem heckseitigen Bereich beidseitig mit einem Gelenkhebel (26,27) karosseriefest angelenkt ist.

3. Verdeck nach Anspruch 1,
**dadurch gekennzeichnet,**
**dass** der seitliche Spannbügel (14, 15) zwischen einer ersten Position in abgelegtem Zustand des Verdecks (2) und einer zweiten, die flexible Dachhaut (4) spannenden Position in geschlossenem Zustand des Verdecks (2) derart verlagerbar ist, dass der Spannbügel (14, 15) mit seinem fahrzeugfrontseitigen Ende gegen die Karosserieabschlussdichtung (8) hochverschwenkt wird.

4. Verdeck nach einem der Ansprüche 1 oder 3,
**dadurch gekennzeichnet,**
**dass** der seitliche Spannbügel (14, 15) in geöffnetem Zustand des Verdecks (2) im Wesentlichen in Höhe der Befestigungseinrichtung (9) der flexiblen Dachhaut (4) und beabstandet hierzu angeordnet ist.

5. Verdeck nach Anspruch 2,
**dadurch gekennzeichnet,**
**dass** der Spannbügel (25) als ein wenigstens annähernd U-förmiger Bügel ausgebildet ist.

6. Verdeck nach einem der Ansprüche 2 oder 5,
**dadurch gekennzeichnet,**
**dass** der Spannbügel (25) einen separaten, in Abhängigkeit einer Kinematik des Verdeckgestänges (5) ansteuerbaren, Antrieb aufweist.

7. Verdeck nach einem der Ansprüche 1, 3 oder 4,
**dadurch gekennzeichnet,**
**dass** der Spannbügel (14, 15) an das Verdeckgestänge (5) angelenkt ist und mittels einer das Verdeckgestänge (5) antreibenden Antriebseinrichtung mit einer Kinematik des Verdeckgestänges (5) bewegbar ist.

8. Verdeck nach einem der Ansprüche 1 bis 7,
**dadurch gekennzeichnet,**
**dass** der wenigstens eine Spannbügel (14, 15, 25) an einem Verdeckhauptlager (23) angelenkt ist.

9. Verdeck nach einem der Ansprüche 1 bis 8,
**dadurch gekennzeichnet,**
**dass** die Befestigungseinrichtung (9) der Fahrzeugkarosserie (7) ein Klemmprofil (10) zur Halterung der flexiblen Dachhaut (4) aufweist.

10. Verdeck nach einem der Ansprüche 1 bis 8,
**dadurch gekennzeichnet,**
**dass** die Befestigungseinrichtung (9) der Fahrzeugkarosserie einen im Wesentlichen die Fahrzeugbreite überspannenden, wenigstens annähernd U-förmigen Bügel (22) aufweist, mit dem die flexible Dachhaut (4) fest verbunden ist.

## Claims

1. A hood for a convertible motor vehicle (1), said hood comprising a flexible roof membrane (4) that is mounted to a hood rod assembly (5) and, in its rear area, to a mounting device (9) of the vehicle body (7), a tensioning device (13, 13') being provided, which acts in closed state of the hood (2) on the flexible roof membrane (4) in the area where the latter is mounted to the vehicle body (7), said tensioning device (13, 13') being provided with at least one tensioning bow (14, 15, 25) that presses the flexible roof membrane (4) against a vehicle body end seal (8) in the closed state of the hood (2),
**characterized in that** the tensioning device (13) comprises a respective lateral tensioning bow (14, 15) assigned to each side of the vehicle, the lateral tensioning bow (14, 15) being substantially arranged in the longitudinal vehicle direction and being pivotable, at its end located at the rear of the vehicle, about a pivot point (20, 21) that is fixed with respect to the vehicle body.

2. A hood for a convertible motor vehicle (1), said hood comprising a flexible roof membrane (4) that is mounted to a hood rod assembly (5) and, in its rear area, to a mounting device (9) of the vehicle body (7), a tensioning device (13, 13') being provided, which acts in closed state of the hood (2) on the flexible roof membrane (4) in the area where the latter is mounted to the vehicle body (7), said tensioning device (13, 13') being provided with at least one tensioning bow (14, 15, 25) that presses the flexible roof membrane (4) against a vehicle body end seal (8) in the closed state of the hood (2),
**characterized in that** the tensioning device (13') is provided with one single U-shaped tensioning bow (25) that extends substantially over the vehicle's width and is hingedly fixed to the vehicle body, on both sides of its rear area, by an articulated lever (26, 27).

3. Hood according to claim 1,
**characterized in that**
the lateral tensioning bow (14, 15) is shiftable, between a first position in the stored state of the hood (2) and a second position tensioning the flexible roof membrane (4) in the closed state of the hood (2), such that the tensioning bow (14, 15) is pivoted upwards, at its vehicle-front-side end, against the vehicle body end seal (8).

4. Hood according to any one of claims 1 or 3,
**characterized in that**,
in the opened state of the hood (2), the lateral tensioning bow (14, 15) is arranged substantially at the level of and spaced apart from the mounting device (9) of the flexible roof membrane (4).

5. Hood according to claim 2,
**characterized in that**
the tensioning bow (25) is provided as an at least approximately U-shaped bow.

6. Hood according to any one of claims 2 or 5,
**characterized in that**
the tensioning bow (25) comprises a separate drive that can be controlled as a function of a kinematic mechanism of the hood rod assembly (5).

7. Hood according to any one of claims 1, 3, or 4,
**characterized in that** the tensioning bow (14, 15) is hingedly connected to the hood rod assembly (5) and is movable by means of a drive unit driving the hood rod assembly (5) with a kinematic mechanism of the hood rod assembly (5).

8. Hood according to any one of claims 1 to 7,
**characterized in that**
the at least one tensioning bow (14, 15, 25) is hingedly connected to a main bearing (23) of the hood.

9. Hood according to any one of claims 1 to 8,
**characterized in that**
the mounting device (9) of the vehicle body (7) comprises a clamping profile (10) for holding the flexible roof membrane (4).

10. Hood according to any one of claims 1 to 8,
**characterized in that**
the mounting device (9) of the vehicle body comprises an at least approximately U-shaped bow (22) which extends substantially over the width of the vehicle and to which the flexible roof membrane (4) is firmly connected.

## Revendications

1. Capote d'un véhicule cabriolet (1), ladite capote comprenant une couverture de toit flexible (4) qui est fixée à un système de tiges (5) de la capote ainsi qu'étant fixée, dans sa zone arrière, à un dispositif de fixation (9) de la carrosserie (7) ; un dispositif de serrage (13, 13') étant prévu qui agit à l'état fermé de la capote (2) sur la couverture de toit flexible (4) dans la région de fixation de cette dernière à la carrosserie (7), ledit dispositif de serrage (13, 13') étant pourvu d'au moins un arceau de serrage (14, 15, 25) qui presse la couverture de toit flexible (4) contre un joint d'étanchéité de carrosserie (8) à l'état fermé de la capote (2),
**caractérisé en ce que** le dispositif de serrage (13) comprend un arceau de serrage latéral (14, 15) respectivement associé à un côté du véhicule, ledit arceau de serrage latéral (14, 15) étant disposé sensiblement en direction longitudinale du véhicule et pouvant être pivoté, à son extrémité à l'arrière du véhicule, autour d'un point de pivotage (20, 21) qui est fixé par rapport à la carrosserie.

2. Capote d'un véhicule cabriolet (1), ladite capote comprenant une couverture de toit flexible (4) qui est fixée à un système de tiges (5) de la capote ainsi qu'étant fixée, dans sa zone arrière, à un dispositif de fixation (9) de la carrosserie (7) ; un dispositif de serrage (13, 13') étant prévu qui agit à l'état fermé de la capote (2) sur la couverture de toit flexible (4) dans la région de fixation de cette dernière à la carrosserie (7), ledit dispositif de serrage (13, 13') étant pourvu d'au moins un arceau de serrage (14, 15, 25) qui presse la couverture de toit flexible (4) contre un joint d'étanchéité de carrosserie (8) à l'état fermé de la capote (2),
**caractérisé en ce que** le dispositif de serrage (13') est pourvu d'un seul arceau de serrage (25) en forme de U qui s'étend sensiblement sur toute la largeur du véhicule et qui est bilateralement articulé dans sa région arrière avec un levier articulé (26, 27) de manière fixe par rapport à la carrosserie.

3. Capote selon la revendication 1,
**caractérisé en ce que**
l'étrier de serrage latéral (14, 15) est déplaçable entre une première position à l'état rangé de la capote (2) et une deuxième position serrant la couverture de toit flexible (4) à l'état fermé de la capote (2), de manière à pivoter l'étrier de serrage (14, 15), à son extrémité disposée à l'avant du véhicule, vers le haut, en direction du joint d'étanchéité de carrosserie (8).

4. Capote selon l'une quelconque des revendications 1 ou 3,
**caractérisé en ce que**
l'étrier de serrage latéral (14, 15) est disposé sensiblement au niveau du dispositif de fixation (9) de la couverture de toit flexible (4), et espacé de celui-ci, à l'état ouvert de la capote (2).

5. Capote selon la revendication 2,
**caractérisé en ce que**
l'étrier de serrage (25) se présente sous la forme d'un arceau au moins approximativement en forme de U.

6. Capote selon l'une quelconque des revendications 2 ou 5,
**caractérisé en ce que**
l'étrier de serrage (25) comprend un entraînement séparé qui peut être asservi en fonction d'une cinématique du système de tiges (5) de la capote.

7. Capote selon l'une quelconque des revendications 1, 3, ou 4,
**caractérisé en ce que** l'étrier de serrage (14, 15) est articulé sur le système de tiges (5) de la capote et mobile au moyen d'une unité d'entraînement qui entraîne le système de tiges (5) de la capote avec une cinématique dudit système de tiges (5) de la capote.

8. Capote selon l'une quelconque des revendications 1 à 7,
**caractérise en ce que**
l'au moins un arceau de serrage (14, 15, 25) est articulé sur un palier principal (23) de la capote.

9. Capote selon l'une quelconque des revendications 1 à 8,
**caractérisé en ce que**
le dispositif de fixation (9) de la carrosserie (7) comprend un profilé de serrage (10) destiné à supporter la couverture de toit flexible (4).

10. Capote selon l'une quelconque des revendications 1 à 8,
**caractérisé en ce que**
le dispositif de fixation (9) de la carrosserie comprend un arceau au moins approximativement en forme de U (22) qui s'étend sensiblement sur toute la largeur du véhicule et avec lequel ladite couverture de toit flexible (4) est solidarisée.
